# EUROPÄISCHE PATENTSCHRIFT

(11) **EP 3 099 536 B1**
(45) Veröffentlichungstag und Bekanntmachung des Hinweises auf die Patenterteilung: **08.08.2018**
(21) Anmeldenummer: 15708109.2
(22) Anmeldetag: 19.01.2015
(51) Int. Cl.: B60R 21/239

(54) **GASSACK UND VERFAHREN ZUM BETRIEB EINES FAHRZEUGINSASSENSCHUTZSYSTEMS**
AIRBAG AND METHOD FOR OPERATING A VEHICLE OCCUPANT PROTECTION SYSTEM
COUSSIN GONFLABLE ET PROCÉDÉ POUR FAIRE FONCTIONNER UN SYSTÈME DE PROTECTION DES OCCUPANTS D'UN VÉHICULE

(30) Priorität: 30.01.2014 DE 102014001084
(43) Veröffentlichungstag der Anmeldung: 07.12.2016
(73) Patentinhaber: TRW Automotive GmbH, 73553 Alfdorf (DE)
(72) Erfinder: ARANZULLA, Daniele, 73547 Essingen (DE); BURKHARDTSMAIER, Martin, 73529 Schwäbisch Gmünd (DE)
(74) Vertreter: ZF TRW Patentabteilung
(86) Internationale Anmeldenummer: PCT/EP2015/000078
(87) Internationale Veröffentlichungsnummer: WO 2015/113739

(56) Entgegenhaltungen:
- EP-A1- 2 048 040
- EP-A1- 2 048 040
- EP-A1- 2 048 040
- DE-A1-102007 024 002
- DE-A1-102007 024 002
- DE-A1-102007 058 656
- DE-A1-102007 058 656
- DE-A1-102007 058 656
- US-A1- 2009 289 444
- US-A1- 2009 289 444

## Beschreibung

Die Erfindung betrifft einen Gassack mit wenigstens einer in einem Gassackmantel vorgesehenen Öffnung, an die ein Verschlusselement angesetzt ist. Außerdem betrifft die Erfindung ein Verfahren zum Betrieb eines Fahrzeuginsassenschutzsystems.

Ein derartiger Gassack ist beispielsweise in der DE 10 2007 058 656 A1 beschrieben, wo ein Ausströmöffnungen aufweisendes Verschlusselement so an die Öffnung im Gassackmantel angesetzt ist, dass es eine nach außen und nach innen stülpbare Erweiterung der Gassackwand bildet. Das Verschlusselement ist mit einem Fangband verbunden und kann darüber in das Innere des Gassacks gezogen werden, um die Ausströmöffnungen zu verschließen. Zum Öffnen der Ausströmöffnungen wird das Verschlusselement durch den Gasdruck nach außen gedrückt.

Auch die EP 1 418 093 B1 zeigt einen Gassack mit einem aus dem Gassack herausstülpbaren Verschlusselement, wobei das Verschlusselement hier als schmaler Schlauch mit einer endseitigen Ausströmöffnung ausgebildet ist. Das Schlauchende ist standardmäßig in das Innere des Gassackmantels hineingezogen und über ein Fangband mit einer Freigabevorrichtung verbunden. Vor der Betätigung der Freigabevorrichtung wird das Verschlusselement durch den Innendruck im Gassack an die Innenwand des Gassackmantels gedrückt, und die Ausströmöffnung ist geschlossen. Nach Betätigung der Freigabevorrichtung wird das Verschlusselement aufgrund des Gassackinnendrucks aus dem Gassackmantel herausgestülpt, und das Gas kann durch die Ausströmöffnung abströmen. Nachteilig ist dabei unter anderem, das nur eine geringe Gasmenge den langen, engen Schlauch passieren kann, was eine schnelle Entlüftung erschwert.

Weiterhin zeigt die DE 10 2007 024 002 A1 einen Gassack mit einem außenliegenden Verschlusselement, das über eine Freigabevorrichtung und ein elastisches Band in eine geöffnete Stellung gebracht werden kann.

Die EP 2 048 040 A1 zeigt zudem einen Gassack bei dem ein Verschlusselement über eine Freigabevorrichtung abhängig von insassenbezogenen Daten in eine geöffnete Stellung gebracht werden kann.

Zudem zeigt die US 2009/0289444 A1 einen Gassack nach dem Oberbegriff von Anspruch 1, mit einem Verschlusselement dessen Fangband fest mit dem Gassackmantel verbunden ist. Dadurch wird das Verschlusselement ab einem bestimmten Entfaltungszustand des Gassacks ins Gassackinnere gezogen und die Ausströmöffnung verschlossen.

Die vorliegende Erfindung schlägt Verbesserungen für das im oben beschriebene Konzept zur Entlüftung eines Gassacks vor.

Aufgabe der Erfindung ist es zum einen, ein ansteuerbares Verschlusselement bereitzustellen, mit dem eine schnelle Entlüftung des Gassacks möglich ist, wenn dies gewünscht ist.

Erfindungsgemäß wird dies mit einem Gassack mit den Merkmalen von Anspruch 1 erreicht. Solange sich das Verschlusselement in der geschlossenen Stellung befindet, kann im Wesentlichen kein Gas durch die Öffnung aus dem Gassack abströmen. Ein Gasaustritt erfolgt erst, wenn das Verschlusselement eine geöffnete Stellung einnimmt. Die Gasabflussmenge kann auf diese Weise durch die Querschnittsfläche der Öffnung im Gassackmantel beeinflusst werden.

Durch die Entfaltung des Gassacks baut sich in einer bevorzugten Ausführungsform ein Zug auf das Fangband auf, der das Verschlusselement im Inneren des Gassacks in der geschlossenen Stellung hält oder in das Innere des Gassacks in die geschlossene Stellung zieht und der bewirkt, dass das Verschlusselement die Öffnung durch eine abdichtende Falte zumindest weitgehend verschließt.

Die Öffnung im Gassackmantel kann daher relativ groß gewählt werden, da es möglich ist, sie durch das nach innen gezogene, durch das Fangband auf Zug gehaltene Verschlusselement auch im voll aufgeblasenen Gassack beim Eintauchen eines Fahrzeuginsassen dicht genug verschlossen zu halten.

In einer bevorzugten Ausführungsform ist das Fangband an einer Freigabevorrichtung fixiert, die situationsbedingt das Fangband freigibt, wodurch das Verschlusselement in eine geöffnete Stellung gelangt.

Eine optimale Krafteinwirkung auf das Verschlusselement lässt sich beispielsweise dadurch erreichen, dass an der Innenseite des Gassackmantels wenigstens zwei Umlenkungen für das Fangband zwischen der Freigabevorrichtung und dem Verschlusselement vorgesehen sind, insbesondere wenn die Freigabevorrichtung in der Nähe des Gasgenerators angeordnet ist. Auf diese Weise können in allen Entfaltungszuständen des Gassacks Zugkräfte auf das Verschlusselement übertragen werden. Genauso kann so sichergestellt werden, dass sich das Fangband bei Betätigen der Freigabevorrichtung so löst, dass der Zug auf das Verschlusselement wegfällt.

Die Freigabevorrichtung ist vorzugsweise eine aktiv angesteuerte Vorrichtung, die mit einer Steuereinheit gekoppelt ist, die ein Lösen des Fangbands in Abhängigkeit von insassen- und/oder fahrzeugbezogenen Parametern veranlasst. Bei den Parametern kann es sich beispielsweise um eine aktuelle Position des Fahrzeuginsassen handeln, darum, ob ein Kindersitz auf dem Sitz vor dem Gassack platziert ist, um das Gewicht des Fahrzeuginsassen, die Position des Sitzes, die Größe des Fahrzeuginsassen, die Zeit ab der Auslösung des Gassacksystems oder auch die Unfallschwere.

Der Moment der Freigabe des Fangbands und damit des Bewegens des Verschlusselements in die geöffnete Stellung und der Zeitpunkt, ab dem Gas aus dem Gassack austritt, ist durch den Aktivierungszeitpunkt der Freigabevorrichtung exakt bestimmt und frei wählbar.

Die Freigabeeinrichtung umfasst beispielsweise eine pyrotechnische Auslöseeinheit, diese kann insbesondere durch einen Sprengbolzen gebildet sein. Vorzugsweise ist die Freigabeeinrichtung im Bereich des Gasgenerators angeordnet, der den Gassack mit Füllgas versorgt, wobei eine Steuereinheit, die den Gasgenerator aktiviert, auch zur Aktivierung der Freigabevorrichtung genutzt werden kann.

Aus der der geschlossenen Stellung kann sich das Verschlusselement in die geöffnete Stellung (oder umgekehrt) vorzugsweise im Wesentlichen in etwa senkrecht zu dem Bereich des Gassackmantels bewegen, der die Öffnung umgibt.

Das Verschlusselement in der nach außen gestülpten geöffneten Stellung, insbesondere bei aufgeblasenem Gassack, hat bevorzugt eine sich verjüngende Hohlkörperform, insbesondere eine Kegelform, Hütchenform oder Trichterform, sodass das Verschlusselement dem aus dem Gassackinneren durch die Öffnung austretenden Gas möglichst wenig Widerstand entgegensetzt.

Bevorzugt weist das Verschlusselement wenigstens eine, vorteilhaft zwei, seitliche Ausströmöffnungen auf, sodass ein schneller Abfluss einer großen Gasmenge erreichbar ist und der Gassack in kurzer Zeit entlüftet werden kann.

In einer möglichen Ausführungsform liegt das Verschlusselement in einer anfänglichen Entfaltungsphase des Gassacks in seiner geschlossenen Stellung innen im Gassackmantel.

Wird die Freigabevorrichtung betätigt, so kann sich das Verschlusselement aufgrund des Gassackinnendrucks aus dem Gassack in die geöffnete Stellung herausstülpen, wenn das Fangband von seiner Befestigung gelöst wird, wobei sich insbesondere die Ausströmöffnung öffnet.

Diese Anordnung erlaubt es, den Gassack mit dem Verschlusselement in der geschlossenen Stellung sehr schnell zu befüllen und gegebenenfalls gezielt zum Zeitpunkt des Eintauchens des Fahrzeuginsassen in den Gassack oder beim Auftreffen auf ein Hindernis ein Ausströmen von Gas durch die Öffnung zuzulassen, um ein weiches Auffangen zu ermöglichen.

Erkennen Sensoren eine Situation, bei der der Gassack von Anfang an weicher sein soll, beispielsweise das Vorhandensein eines Kindersitzes oder eines Fahrzeuginsassen in einer ungünstigen Stellung, so kann die Freigabevorrichtung direkt mit der Zündung des Gasgenerators bereits zu Beginn des Aufblasens des Gassacks aktiviert werden, sodass von Anfang an Gas ausströmen kann und sich der Gassack langsamer und/oder nicht mit der normalen Härte füllt.

In einer anderen Ausführungsform ist das Verschlusselement in einer anfänglichen Entfaltungsphase des Gassacks in seiner geöffneten Stellung zumindest teilweise außerhalb des Gassackmantels, und die Ausströmöffnung ist von Anfang an offen. In diesem Fall wird durch den sich während des Aufblasens erhöhenden Zug auf das Fangband das Verschlusselement nach und nach ins Innere des Gassackmantels hineingezogen, bis es sich gefaltet vorzugsweise an die Innenseite des Gassackmantels anlegt.

Es ist möglich, die Länge des Fangbands und die Geometrie des Gassacks so einzustellen, dass die Öffnung erst bei vollständig entfaltetem Gassack geschlossen ist. Trifft der Gassack während der Entfaltung auf ein Hindernis, beispielsweise einen ungünstig platzierten Fahrzeuginsassen oder einen Kindersitz, so bleibt die Öffnung geöffnet und ein Teil des Gases entweicht. Entfaltet sich der Gassack jedoch planmäßig, ohne auf ein Hindernis zu treffen, so wird durch das Fangband das Verschlusselement in die geschlossene Stellung gezogen und die Öffnung verschlossen. Der Gassack entfaltet sich zu seinem maximalen Volumen und erreicht seinen maximalen Innendruck, sodass ein Fahrzeuginsasse optimal aufgefangen werden kann.

Um zu verhindern, dass sich die Öffnung beim Eintauchen eines Insassen durch den Druckanstieg im Gassack ungewollt wieder öffnet, kann eine Verriegelungsstruktur am Fangband vorgesehen sein, die ab einem vorbestimmten Entfaltungszustand des Gassacks eine Rückbewegung des Verschlusselements verhindert. In einer möglichen Ausführungsform wird versucht, einen klein verpackbaren Gassack zu schaffen sowie die Ausströmöffnung im geschlossenen Zustand möglichst dicht verschlossen zu halten.

Dies wird erfindungsgemäß bei einem Gassack mit wenigstens einer in einem Gassackmantel vorgesehenen Öffnung erreicht, an die ein Verschlusselement mit wenigstens einer Ausströmöffnung angesetzt ist, wobei ein Umfangsrand des Verschlusselements umlaufend um den Rand der Öffnung so befestigt ist, dass der Rand der Öffnung eine umfangsmäßig umlaufende Blende bildet, die radial über den Umfangsrand des Verschlusselements nach innen vorsteht.

Der Gassack kann beispielsweise wie oben beschrieben ausgebildet sein und auch so wie oben beschrieben eingesetzt werden.

Der Umfangsrand des Verschlusselements ist vorzugsweise umlaufend ohne Unterbrechung und mit radialem Abstand zum Rand der Öffnung befestigt. Auf diese Weise bildet der Rand der Öffnung bis zur Umfangsnaht, mit der das Verschlusselement am Gassackmantel befestigt ist, eine Blende zwischen dem Verschlusselement und dem Inneren des Gassacks. Diese Blende unterstützt die Gewebelagen des Verschlusselements und dichtet das Verschlusselement im geschlossenen Zustand, in dem das Verschlusselement im Inneren des Gassacks liegt, seitlich ab.

Die Blende bleibt vorzugsweise zumindest weitgehend gegenüber dem Verschlusselement beweglich, sodass das Verschlusselement auch bei hohem Gasdruck den Rand der Öffnung nicht übermäßig verzerren kann. Daher steht stets der gesamte Querschnitt der Öffnung für den Austritt von Gas aus dem Gassack in das Verschlusselement zur Verfügung.

Bei der Verwendung gleicher Verschlusselemente kann durch eine Variation der Fläche der Ausströmöffnung die Gasabströmung einfach angepasst werden.

Es ist natürlich auch möglich, als Blende ein separates, ringförmiges Gewebestück um den Rand der Öffnung vorzusehen, wobei dann die Öffnung durch das Gewebestück definiert ist.

Die Querschnittsfläche der Öffnung ist vorzugsweise in etwa rautenförmig, da sich gezeigt hat, dass sich so eine flache Faltung des Gassacks erzielen lässt.

Der Umfangsrand des Verschlusselements liegt vorzugsweise nicht in einer Ebene, sondern ist so geformt, dass er annähernd dieselbe Form wie die Öffnung im Gassackmantel hat, wenn das Verschlusselement am Gassackmantel befestigt ist. Diese Form reduziert bzw. verhindert Einschnürungen an der Blende. Erfindungsgemäß wird das Verschlusselement so gestaltet, dass es in der geöffneten Stellung eine stabile Form einnimmt und sich gleichzeitig auf einfache Weise und platzsparend gefaltet im Gassack unterbringen lässt.

Erfindungsgemäß wird dies bei einem Gassack mit wenigstens einer in einem Gassackmantel vorgesehenen Öffnung erreicht, an die ein Verschlusselement mit wenigstens einer Ausströmöffnung angesetzt ist, wobei das Verschlusselement wenigstens zwei übereinanderliegende, entlang eines Umfangsrands miteinander verbundene Zuschnittsabschnitte aufweist und wobei wenigstens einer der Zuschnittsabschnitte eine oder mehrere abgenähte Falten aufweist und/oder aus mehreren Zuschnittsteilen mit wenigstens einer Bogennaht zusammengesetzt ist, sodass der Zuschnittsabschnitt nicht flach ausbreitbar ist.

Es ist möglich, beide der Zuschnittsabschnitte auf diese Weise auszubilden. Es hat sich jedoch herausgestellt, dass bereits eine ausreichende Stabilität erreicht wird, wenn der zweite Zuschnittsabschnitt aus einem einstückigen, flach ausbreitbaren Gewebeabschnitt gebildet ist.

Die nicht flache, also gewölbt vorgeformte Form des einen Zuschnittsabschnitts sorgt für eine Verkürzung der Öffnungszeit der Ausströmöffnung, also für eine Verkürzung der Zeit, die das Verschlusselement braucht, um sich aus dem Gassackmantel heraus aus der geschlossenen Stellung in seine geöffnete Stellung auszustülpen und bewirkt eine Stabilisierung der Form des Verschlusselements in der geöffneten Stellung.

Auch in diesem Fall kann der Gassack natürlich die weiteren Merkmale, die oben bereits diskutiert wurden, aufweisen, und genauso eingesetzt werden wie die bereits beschriebenen Gassäcke.

Eine besonders geeignete Form für das Verschlusselement ergibt sich, wenn jeder der Zuschnittsabschnitte einen Teilbereich aufweist, der sich vom Umfangsrand in die Fläche des Zuschnittsabschnitts erstreckt, wobei sich die beiden Teilbereiche bei verschlossener Ausströmöffnung zu einer Fläche ergänzen, die in ihrer Form der Querschnittsfläche der Öffnung im Gassackmantel entspricht.

Es ist günstig, eine Form zu wählen, die es erlaubt, das Verschlusselement insgesamt so zu falten, dass sich aus Teilbereichen der beiden Zuschnittsabschnitte eine geschlossene flache Fläche ergibt, die in ihrer Form der Öffnung im Gassackmantel entspricht, aber etwas größer ist, sodass sie flach auf den Gassackmantel über der Öffnung aufgenäht werden kann. Auf diese Weise werden Zugkräfte auf den Rand der Öffnung verhindert, die die Öffnung verformen könnten. Dies sorgt dafür, dass in allen Entfaltungsstadien des Gassacks die Ausströmung vom Gas vom Inneren des Gassackmantels in das Verschlusselement gleichbleibend ist. Eventuell in diesem Teilbereich liegende Abnäher sollten so ausgelegt sein, dass sie sich in die flache Fläche einfügen. Gleiches gilt bei der Verwendung von Bogennähten, die so ausgebildet sein sollten, dass sich in dem Teilbereich eine flach ausbreitbare Fläche ergibt.

Das Verschlusselement kann beispielsweise aus zwei übereinanderliegenden Zuschnittsabschnitten bestehen, die jeweils etwa keulen- oder glockenförmig gestaltet sind. An einem langgestreckten Ende jedes der Zuschnittsabschnitte setzt ein Fangband an, während an dem dem langgestreckten Ende gegenüberliegenden Umfangsrand der jeweilige Zuschnittsabschnitt am Gassackmantel befestigt ist. Die Zuschnittsabschnitte sind miteinander am langgestreckten Ende verbunden sowie jeweils an einem Abschnitt im Bereich des Umfangsrands, vorzugsweise durch Vernähen, wobei die Zuschnittsabschnitte über einen Großteil der zwischen dem langgestreckten Ende und dem Umfangsrand liegenden Seitenränder nicht verbunden sind, sodass zwei seitliche Ausströmöffnungen im Verschlusselement gebildet sind. Die Verbindung der Zuschnittsabschnitte erfolgt vorzugsweise an einer Stelle, wo die Seitenränder auf den Umfangsrand des jeweiligen Zuschnittsabschnitts treffen, sodass der Umfangsrand einen geschlossenen Ring bildet.

Es ist im Wesentlichen ausreichend, wenn die beiden Zuschnittsabschnitte an drei Stellen verbunden sind, nämlich am langgestreckten Ende sowie an den beiden am weiten seitlich außen liegenden Bereichen ihres Umfangsrands. Auf diese Weise können im Wesentlichen die gesamten Seitenränder zwischen dem Umfangsrand und dem langgestreckten Ende als Ausströmöffnung dienen, was einen hohen Gasfluss erlaubt. Außerdem werden die Zahl der Nähte und die Länge der Nähte insgesamt gering gehalten.

Es ist möglich, zwei separate Zuschnittsabschnitte zu verwenden. Die beiden Zuschnittsabschnitte können aber an ihren langgestreckten Enden auch einstückig miteinander verbunden sein.

Zur Befestigung des Fangbands ist am Verschlusselement vorzugsweise eine Schlaufe vorgesehen, an der das Fangband angreift. Hierzu können beispielsweise die beiden Zuschnittsabschnitte zu einer Gewebeschlaufe vernäht sein, durch die eine Kordel hindurchgezogen ist. Dies bietet sich vor allem an, wenn die beiden Zuschnittsabschnitte einstückig miteinander ausgebildet sind.

Der Begriff "Fangband" ist nicht auf flache Bänder beschränkt, sondern umfasst alle flexiblen zugübertragende, langgestreckte Körper.

Es ist auch möglich, eine Kordel oder eine Gewebeschlaufe jeweils mit dem langgestreckten Ende entweder beider Zuschnittsabschnitte oder jeweils eines Zuschnittsabschnitts zu vernähen, sodass sich eine Schlaufe ergibt.

Der Vorteil der Verwendung einer zusätzlichen Schlaufe gegenüber dem festen Vernähen des Fangbands direkt am Verschlusselement liegt darin, dass sich eine bessere Kraftverteilung einstellen kann, wenn sich das Fangband gegenüber dem Verschlusselement ausrichten kann.

Außerdem erfüllt die Erfindung auch die Aufgabe, einen verbesserten Fahrzeuginsassenschutz zu bieten.

Dies wird durch ein erfindungsgemäßen Verfahren zum Betrieb eines Fahrzeuginsassenschutzsystems erreicht, wobei das Fahrzeuginsassenschutzsystem einen Gassack aufweist, wie er oben beschrieben wurde. Die mit der Freigabevorrichtung gekoppelte Steuereinheit kann das Lösen des Fangbands bereits zu Beginn des Entfaltungsvorgangs veranlassen, wenn eine mit der Steuereinheit verbundene Sensorik vorbestimmte insassen- und/oder fahrzeugbezogene Parameter erkennt. Hier sind besonders Parameter relevant, die auf ein Hindernis im Entfaltungsweg des Gassacks schließen lassen.

Diese Aufgabe wird auch mit einem Verfahren zum Betrieb eines Fahrzeuginsassenschutzsystems gelöst, das mit einem oben beschriebenen Gassack bestückt sein kann, wobei in einem anfänglichen Entfaltungszustand des Gassacks das Verschlusselement in seiner geöffneten Stellung ist und mit zunehmender Entfaltung des Gassacks das Verschlusselement in das Innere des Gassackmantels in die geschlossene Stellung hineingezogen wird. Auf das Fangband wird über dessen Fixierung ab einem vorbestimmten Entfaltungszustand des Gassacks ein ausreichender Zug auf das Verschlusselement ausgeübt, um dieses in der geschlossenen Stellung zu halten. Die Freigabevorrichtung kann in Abhängigkeit von vorbestimmten insassen- und/oder fahrzeugbezogenen Parametern das Fangband lösen, sodass das Verschlusselement durch den Innendruck des Gassacks wieder in die geöffnete Stellung bewegt wird. In diesem Fall erfolgt grundsätzlich eine Gasabströmung durch die Öffnung, wenn der Gassack auf ein Hindernis trifft, auch ohne dass die Freigabevorrichtung ausgelöst wird. Entfaltet sich der Gassack jedoch planmäßig, so wird die Gasabströmung im Verlauf des Entfaltens gestoppt. Soll aber der Gassack beim Aufprall des Insassen eine geringere als die maximale Härte aufweisen, beispielsweise weil Sensoren eine entsprechende Position oder ein entsprechendes Gewicht des Fahrzeuginsassen festgestellt haben, so wird die Freigabevorrichtung zum geeigneten Zeitpunkt aktiviert und das Fangband gelöst, sodass wieder eine Gasabströmung erfolgt.

Sämtliche beschriebenen Merkmale der einzelnen Ausführungsformen lassen sich im Ermessen des Fachmanns gegeneinander austauschen oder miteinander kombinieren.

Die Erfindung wird nachfolgend anhand mehrerer Ausführungsbeispiele mit Bezug auf die beigefügten Zeichnungen näher beschrieben. In den Zeichnungen zeigen:
- Figur 1 einen erfindungsgemäßen Gassack gemäß einer ersten Ausführungsform in einer schematischen Draufsicht, wobei das Verschlusselement in der geschlossenen Stellung ist;
- Figur 2 den Gassack aus Figur 1 in einer schematischen Schnittansicht entlang der Linie II-II in Figur 1;
- Figur 3 den Gassack aus Figur 1 in einer schematischen Draufsicht, wobei das Verschlusselement in einer geöffneten Stellung ist;
- Figur 4 den Gassack aus Figur 3 in einer schematischen Schnittansicht entlang der Linie IV-IV in Figur 3;
- Figur 5 das Verschlusselement des Gassacks aus Figur 3 in einer schematischen perspektivischen Ansicht;
- Figur 6 einen erfindungsgemäßen Gassack gemäß einer zweiten Ausführungsform in einer schematischen Draufsicht, wobei das Verschlusselement in der geöffneten Stellung ist;
- Figur 7 eine schematische Schnittansicht des Gassacks aus Figur 6 entlang der Linie VII-VII in Figur 6;
- Figur 8 eine schematische Draufsicht des Gassacks aus Figur 6 während des Schließens der Ausströmöffnung und der Arretierung des Verriegelungselements;
- Figur 9 eine schematische perspektivische Darstellung der Arretierung des Verriegelungselements des Gassacks aus Figur 8;
- Figur 10 eine schematische Schnittansicht des Gassacks in Figur 8 entlang der Linie X-X in Figur 8;
- Figur 11 eine schematische Ansicht des Gassacks aus Figur 6 mit geschlossener Ausströmöffnung und arretiertem Fangband;
- Figur 12 eine schematische Schnittansicht des Gassacks aus Figur 11 entlang der Linie XII-XII in Figur 11;
- Figur 13 einen erfindungsgemäßen Gassack gemäß einer dritten Ausführungsform in einer schematischen Schnittansicht mit geöffneter Ausströmöffnung beim Auftreffen auf einen Fahrzeuginsassen;
- Figur 14 den Gassack aus Figur 13 mit geöffneter Ausströmöffnung beim Auftreffen auf einen Kindersitz;
- Figur 15 den Gassack aus Figur 13 im voll aufgeblasenen Zustand mit geschlossener Ausströmöffnung vor dem Eintauchen des Fahrzeuginsassen;
- Figur 16 den Gassack aus Figur 15 beim Eintauchen des Insassen mit geöffneter Ausströmöffnung;
- Figur 17 eine schematische Draufsicht auf einen Ausschnitt eines erfindungsgemäßen Gassacks von der Außenseite des Gassackmantels mit einem Verschlusselement in geschlossener Stellung;
- Figur 18 eine schematische Ansicht eines Verschlusselements für den Gassack aus Figur 17;
- Figur 19 eine mögliche Gestaltung eines Zuschnitts des Verschlusselements aus Figur 17, bei dem zwei Zuschnittsabschnitte einstückig miteinander verbunden sind;
- Figuren 20 und 21 eine mögliche Gestaltung der Zuschnittsabschnitte eines Verschlusselements des Gassacks aus Figur 17, bei dem die beiden Zuschnittsabschnitte als separate Teile ausgebildet sind;
- Figur 22 eine weitere Gestaltung des Zuschnitts eines Verschlusselements eines Gassacks aus Figur 17, bei der einer der Zuschnittsabschnitte aus drei Teilen zusammengesetzt ist, die jeweils mit Bogennähten verbunden sind;
- Figur 23 eine weitere Gestaltung eines Zuschnitts eines Verschlusselements des Gassacks aus Figur 17, bei dem einer der Zuschnittsabschnitte aus drei Teilen zusammengesetzt ist, die jeweils mittels Bogennähten verbunden sind, wobei die beiden Zuschnittsabschnitte getrennte Teile bilden;
- Figur 24 eine weitere Gestaltung eines Zuschnitts eines Verschlusselements des Gassacks aus Figur 17, bei dem einer der Zuschnittsabschnitte aus zwei Teilen zusammengesetzt ist, die mit Bogennähten verbunden sind;
- Figur 25 eine schematische Darstellung der Befestigung des Fangbands am Verschlusselement, bei der das Fangband mit beiden Zuschnittsabschnitten vernäht ist;
- Figur 26 das Detail XXVI aus Figur 25; und
- Figur 27 eine schematische Darstellung der Befestigung des Fangbands am Verschlusselement, bei der das Fangband einzeln an jedem der Zuschnittsabschnitte befestigt ist.

Aus Gründen der Übersichtlichkeit werden in den Figuren dieselben Bezugszeichen für alle Ausführungsformen verwendet, sofern sich Teile nicht deutlich gegenüber einer vorherigen Ausführungsform unterscheiden. In diesem Fall erhält das jeweilige Teil eine um jeweils 100 erhöhte Nummer.

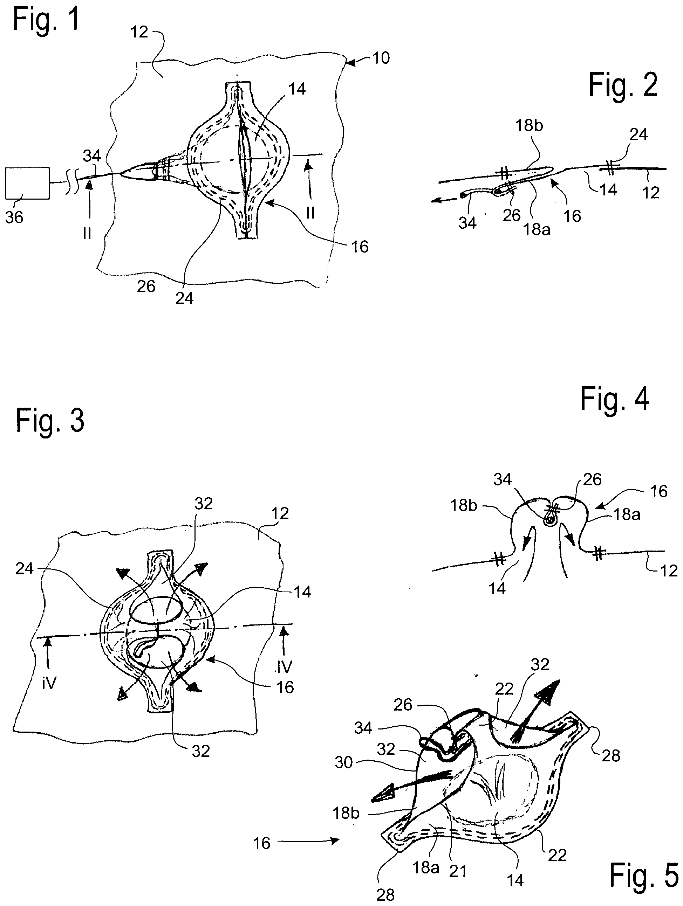

Die Figuren 1 bis 5 zeigen einen Gassack 10 gemäß einer ersten Ausführungsform.

Vom Gassack 10 ist in den Figuren nur ein Ausschnitt eines Gassackmantels 12 dargestellt, der im Wesentlichen den Innenraum des Gassacks 10 umschließt.

Im Gassackmantel 12 ist eine Öffnung 14 ausgebildet, die von einem separaten, mit dem Gassackmantel 12 vernähten Verschlusselement 16 überdeckt ist. Die gesamte Öffnung 14 im Gassackmantel 12 ist vom Verschlusselement 16 bedeckt, wie in Figur 1 zu erkennen ist.

Anstelle des Vernähens kann in der gesamten Anmeldung auch eine andere geeignete Befestigungsart verwendet werden, beispielsweise Schweißen, Kleben oder einstückiges Weben. Der Begriff "nähen" oder "Nähte" wird hier nur aus Gründen der Übersichtlichkeit durchgehend verwendet.

Das Verschlusselement ist näher in Figur 5 dargestellt. Es besteht hier aus zwei Zuschnittsabschnitten 18a, 18b, die jeweils einen von einem Umfangsrand 20 und zwei Seitenrändern 21 begrenzten Flächenbereich sowie gegenüber dem Umfangsrand 20 ein langgestrecktes Ende 22 aufweisen. In Draufsicht haben die Zuschnittsabschnitte 18a, 18b eine etwa Glocken- oder Keulenform.

Der Umfangsrand 20 jedes der Zuschnittsabschnitte 18a, 18b ist mittels einer Umfangsnaht 24 mit dem Gassackmantel 12 vernäht.

An den langgestreckten Enden 22 sind die beiden Zuschnittsabschnitte 18a, 18b miteinander mittels einer Naht 26 verbunden. In diesem Beispiel sind die beiden Zuschnittsabschnitte 18a, 18b außerdem noch an den beiden am weiten außen liegenden Randbereichen 28 miteinander vernäht (siehe Figur 5), sodass das Verschlusselement 16 insgesamt einen umlaufenden Umfangsrand hat. Abgesehen von diesen Verbindungen sind die Zuschnittsabschnitte 18a, 18b nicht aneinander fixiert, sodass das Verschlusselement 16 über der Öffnung 14 im Gassackmantel 12 vollständig offen ist. Ebenso sind die Seiten 21 zwischen dem Randbereich 28 und dem langgestreckten Ende 22 offen, sodass zwei große, seitliche, tropfenförmige Ausströmöffnungen 32 gebildet sind.

Das Verschlusselement 16 kann eine geschlossene Stellung annehmen, die in den Figuren 1 und 2 dargestellt ist, bei der es in das Innere des Gassackmantels 12 hineingefaltet ist und die Ausströmöffnungen 32 und damit die gesamte Öffnung 14 durch das gefaltete und zusammengelegte Verschlusselement 16 im Wesentlichen gasdicht verschlossen sind.

In der geöffneten Stellung, die in den Figuren 3 bis 5 gezeigt ist, ist das Verschlusselement hingegen nach außen aus dem Gassackmantel 12 herausgestülpt, sodass sich eine im Wesentlichen senkrecht zum Gassackmantel 12 in der Umgebung der Öffnung 14 senkrecht nach außen abstehende Wölbung ergibt. Das Verschlusselement 16 in seiner geöffneten Stellung gleicht einem sich nach außen verjüngenden Hohlkörper, der beispielsweise kegelförmig, trichterförmig oder hütchenförmig ist.

Um das Verschlusselement 16 in der geschlossenen Stellung zu halten oder es in die geschlossene Stellung zu bringen, ist an den langgestreckten Enden 22 der Zuschnittsabschnitte 18a, 18b des Verschlusselements 16 ein Fangband 34 angesetzt, das zumindest anfänglich fest im Gassack 10 fixiert ist.

Wird Zug auf das Fangband 34 ausgeübt, so bleibt das Verschlusselement 16 auch bei ansteigendem Gassackinnendruck im Inneren des Mantels 12 oder wird in diesen hineingezogen, wenn es sich in der geöffneten Stellung befindet. Der Zug auf das Fangband 34 bewirkt außerdem, dass der Gasdruck das Verschlusselement 16 nicht nach außen stülpt, sondern von innen gegen den Gassackmantel 12 drückt und so die Ausströmöffnung 32 verschließt oder verschlossen hält.

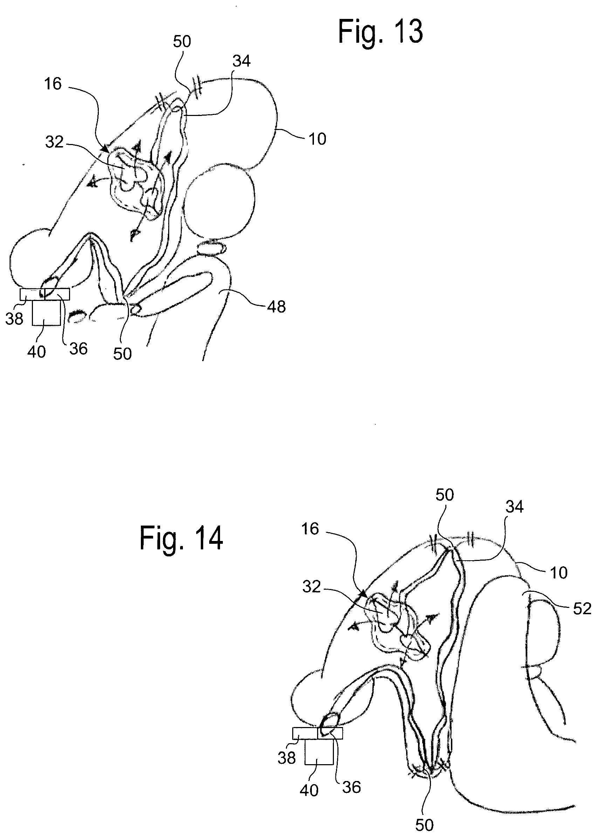

In der hier gezeigten Ausführungsform ist das Fangband 34 mit einer Freigabevorrichtung 36 verbunden, die beispielsweise am Gasgenerator 38 vorgesehen ist, der den Gassack 10 mit Füllgas versorgt (siehe schematisch in den Figuren 13 bis 16).

Die Freigabevorrichtung 36 ist so ausgebildet, dass sie das zunächst mit ihr verbundene Fangband 34 freigeben kann, sodass kein Zug mehr auf das Fangband 34 wirkt.

In diesem Beispiel ist die Freigabevorrichtung 36 als pyrotechnische Vorrichtung ausgebildet, beispielsweise mit einem Sprengbolzen, wobei eine Zündung und damit eine Freigabe des Fangbands durch eine Steuereinheit 40 erfolgt (siehe Figur 13), die in vorbestimmten Situationen ein Auslösesignal an die Freigabevorrichtung 36 sendet.

In einem ersten möglichen Verfahren ist das Verschlusselement 16 in seiner geschlossenen Stellung im gefalteten Gassack 10 untergebracht. Das Fangband 34 ist so angeordnet und in seiner Länge so bemessen, dass zu Beginn der Entfaltung des Gassacks 10 ein genügender Zug auf das Fangband 34 wirkt, um das Verschlusselement 16 in der geschlossenen Stellung im Inneren des Gassackmantels 12 zu halten.

Bei einer normalen Entfaltung des Gassacks 10 bleibt das Verschlusselement 16 die gesamte Zeit in der geschlossenen Stellung, und die Ausströmöffnungen 32 bleiben verschlossen, sodass durch diese im Wesentlichen kein Gas aus dem Gassack 10 abströmt.

Eine (nicht dargestellte) Sensorik erfasst situationsbedingte, insassenbezogene und/oder fahrzeugbezogene Parameter wie etwa eine Sitzposition, Größe und Gewicht des Fahrzeuginsassen, eine aktuelle Position des Insassen, die seit dem Aktivieren des Gasgenerators verstrichenen Zeit oder eine Unfallschwere. Aufgrund eines oder mehrerer dieser Parameter kann die Steuereinheit 40 entscheiden, das Fangband 34 freizugeben, woraufhin der im Gassack 10 herrschende Innendruck das Verschlusselement 16 aus dem Gassackmantel 12 durch die Öffnung 14 herausstülpt und in seine geöffnete Stellung bringt, sodass Gas durch die Ausströmöffnungen 32 abströmen kann.

In dem Fall, dass beispielsweise eine ungünstige aktuelle Position des Fahrzeuginsassen erkannt wird, oder erkannt wird, dass ein Kindersitz auf dem Fahrzeugsitz montiert ist, gibt in diesem Beispiel die Freigabevorrichtung 36 das Fangband 34 direkt mit Beginn der Entfaltung des Gassacks 10 frei, sodass ein Teil des Füllgases permanent aus dem Gassack 10 abströmt.

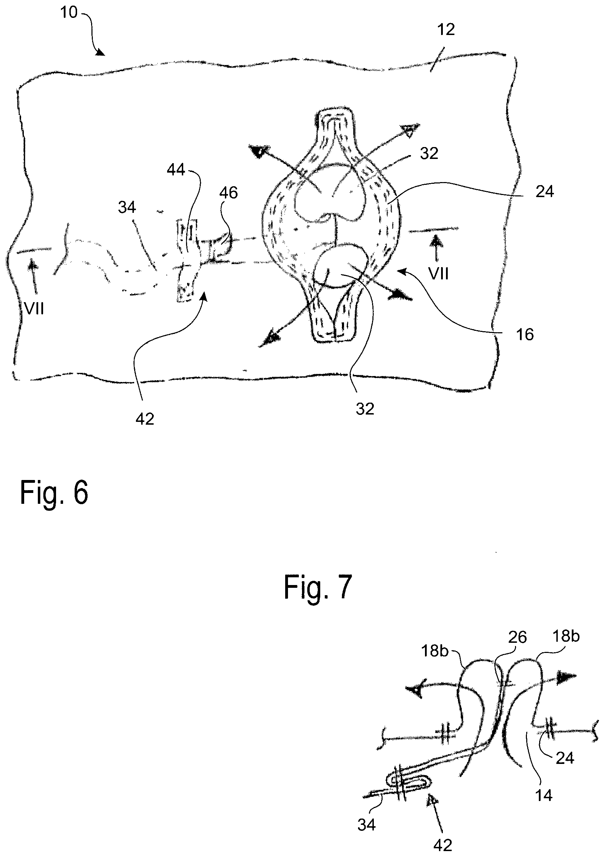

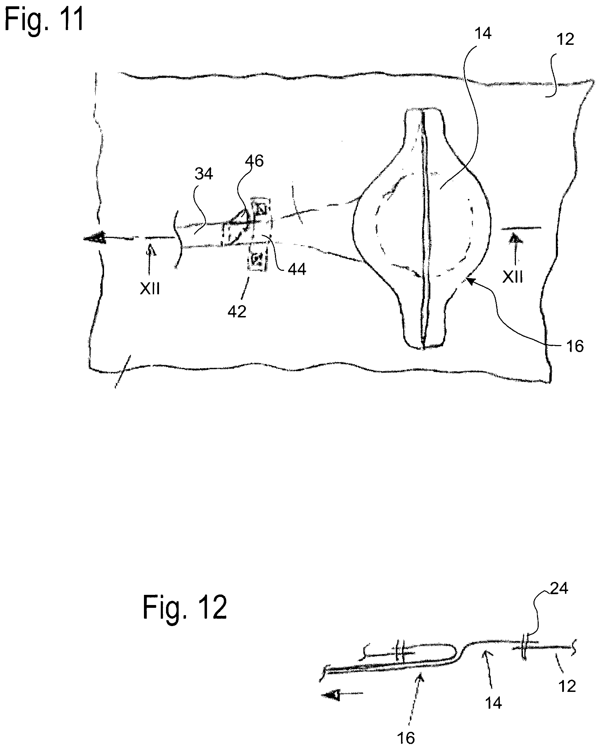

Die Figuren 6 bis 12 zeigen eine zweite Ausführungsform.

In diesem Fall ist vorgesehen, dass das Verschlusselement 16 im gefalteten Gassack 10 in seiner geöffneten Stellung ist, sodass es sich bereits zu Beginn der Entfaltung in der geöffneten Stellung befindet und die Ausströmöffnungen 32 freigegeben sind.

Bei fortschreitender Entfaltung des Gassacks 10 übt dieser durch seine Ausdehnung Zug auf das Fangband 34 aus und zieht dadurch das Verschlusselement 16 durch die Öffnung 14 in dessen geschlossene Stellung, in der die Ausströmöffnung 32 verschlossen ist. Im vollständig entfalteten Zustand ist hier die Ausströmöffnung 32 komplett verschlossen.

Trifft der Gassack 10 jedoch bei der anfänglichen Entfaltung auf ein Hindernis, so bleibt das Verschlusselement 16 in seiner geöffneten Stellung und die Ausströmöffnungen 32 bleiben geöffnet (siehe auch Ausführungsform den nach Figuren 13 bis 16).

Damit sich die Ausströmöffnung 32 beim Auffangen des Fahrzeuginsassen durch den Druckanstieg im Inneren des Gassacks 10 nicht unbeabsichtigt öffnet, ist in diesem Fall eine Verriegelungsstruktur 42 vorgesehen, die das Verschlusselement 16 in der geschlossenen Stellung hält.

Die Verriegelungsstruktur 42 besteht hier aus einer innen am Gassackmantel 12 angebrachten Lasche 44 sowie einem dazugehörigen Verrastelement 46 am Fangband 34. Das Verrastelement 46 ist hier einfach durch eine abgenähte Schlaufe des Fangbands 34 gebildet.

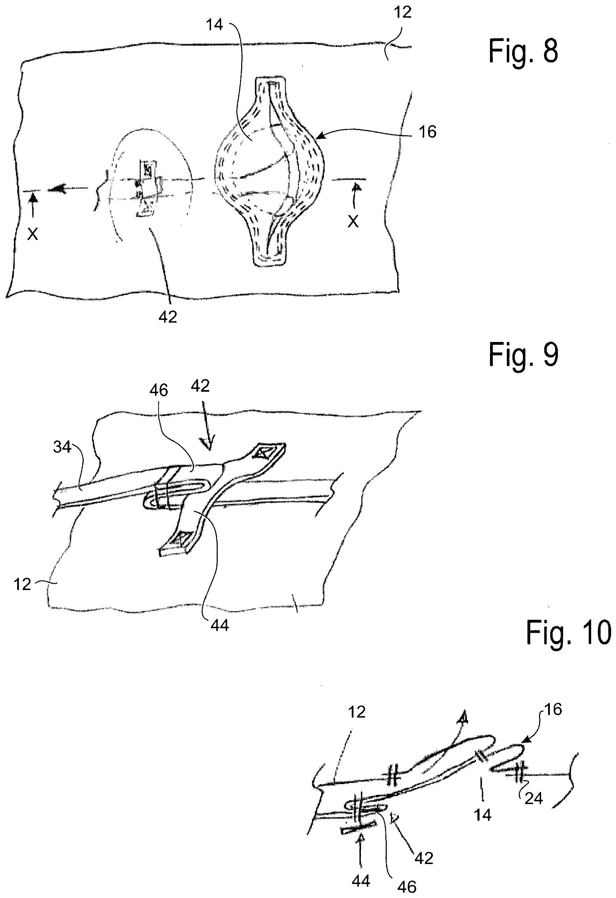

In Zugrichtung hin zum geschlossenen Zustand gleitet das Verrastelement 46 durch die Lasche 44, ohne dass eine nennenswert höhere Kraft ausgeübt werden müsste. Eine Rückbewegung ist jedoch unterbunden, da die abstehende Schlaufe des Verrastelements 46 sich an der Lasche 44 verhakt (siehe Figur 9).

Bei dieser Ausführungsform ist keine Freigabevorrichtung 36 vorgesehen. Es wäre jedoch möglich, auch hier das Fangband 34 an einer derartigen Freigabevorrichtung 36 zu befestigen, die in bestimmten Situationen das Fangband 34 freigibt, sodass sich das Verschlusselement 16 wieder in die geöffnete Stellung bewegen kann. In diesem Fall kann dann die Verriegelungsstruktur weggelassen werden oder so ausgelegt werden, dass sie bei Auslösen der Freigabevorrichtung außer Kraft gesetzt wird.

Eine solche Kombination ist in den Figuren 13 bis 16 dargestellt.

Figur 13 zeigt den Fall, wo ein Fahrzeuginsasse 48 sich in einer ungünstigen Position befindet, wenn der Gassack 10 sich entfaltet.

Das Verschlusselement 16 ist hier zu Beginn der Entfaltung des Gassacks 10 in seiner geöffneten Stellung, sodass die Ausströmöffnungen 32 freigegeben sind und offen sind. Beim Auftreffen des Gassacks 10 auf den Fahrzeuginsassen 48 ist über das Fangband 34 noch kein genügender Zug aufgebaut, um das Verschlusselement 16 zu bewegen. Das Verschlusselement 16 bleibt daher in seiner geöffneten Position. Das Gas kann aus dem Gassack durch die Ausströmöffnungen 32 abströmen, und der Gassack 10 bleibt relativ weich.

Das Fangband 34 wird hier an zwei Stellen zwischen den Befestigungsstellen an der Freigabevorrichtung 36 und dem Verschlusselement 16 am in der Figur oberen und unteren Ende des Gassacks 10 durch Umlenkungen 50 umgelenkt.

Figur 14 zeigt den Fall, in dem ein Kindersitz 52 auf dem Fahrzeugsitz montiert ist. Analog zu der gerade beschriebenen Situation bleibt der Gassack 10 über seine gesamte Entfaltungsdauer in einem Zustand, in dem das Verschlusselement 16 in der geöffneten Stellung ist und Gas über die Ausströmöffnungen 32 ausströmen kann.

In beiden Fällen spricht die Freigabevorrichtung 36 nicht an. Das Fangband bleibt über die gesamte Entfaltungsdauer des Gassacks 10 mit der Freigabevorrichtung 36 verbunden.

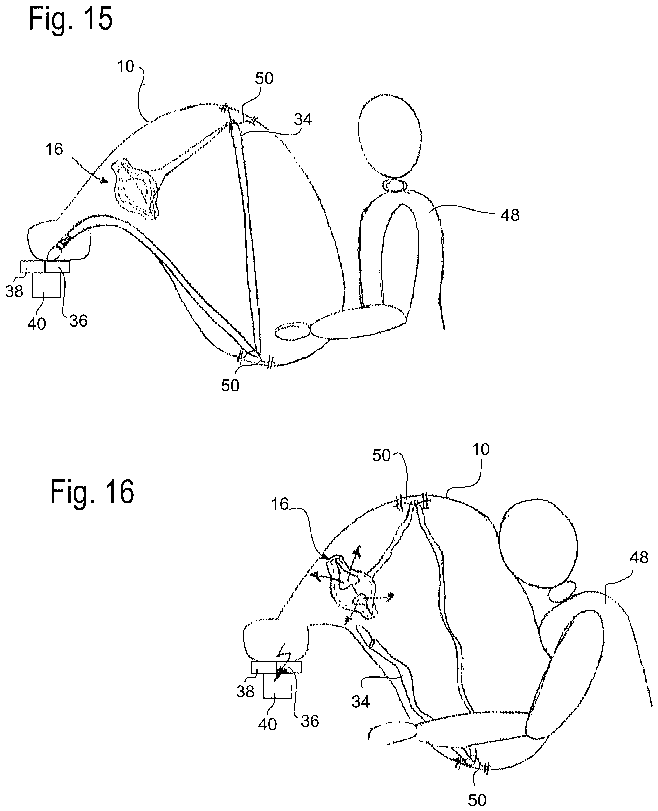

In Figur 15 ist der Fall dargestellt, in dem ein Fahrzeuginsasse 48 von einem komplett gefüllten Gassack 10 aufgefangen wird. Der Gassack 10 entfaltet sich wie vorgesehen zu seiner vollen Größe, ohne auf ein Hindernis zu treffen. Ab einem gewissen Entfaltungszustand beginnt Zug auf das Fangband 34 zu wirken, sodass das Verschlusselement 16 in die geschlossene Stellung gezogen wird und die Ausströmöffnungen 32 verschlossen werden.

Figur 16 zeigt den Fall, bei dem nach dem vollständigen Entfalten und Aufblasen des Gassacks 10 die Härte des Gassacks 10 verringert werden soll, beispielsweise bei einem kleinen, leichten und/oder nahe am Gassack sitzenden Fahrzeuginsassen 48. Hier wird, nachdem der Gassack 10 seinen vollständig entfalteten Zustand angenommen hat, die Freigabevorrichtung 36 aktiviert und das Fangband 34 gelöst. Durch den Gassackinnendruck, spätestens aber beim Eintauchen des Fahrzeuginsassen 48 in den Gassack 10, wird das Verschlusselement 16 durch die Öffnung 14 in seine geöffnete Stellung aus dem Gassackmantel 12 hinausgestülpt und die Ausströmöffnungen 32 geöffnet, sodass das Gas ausströmen kann.

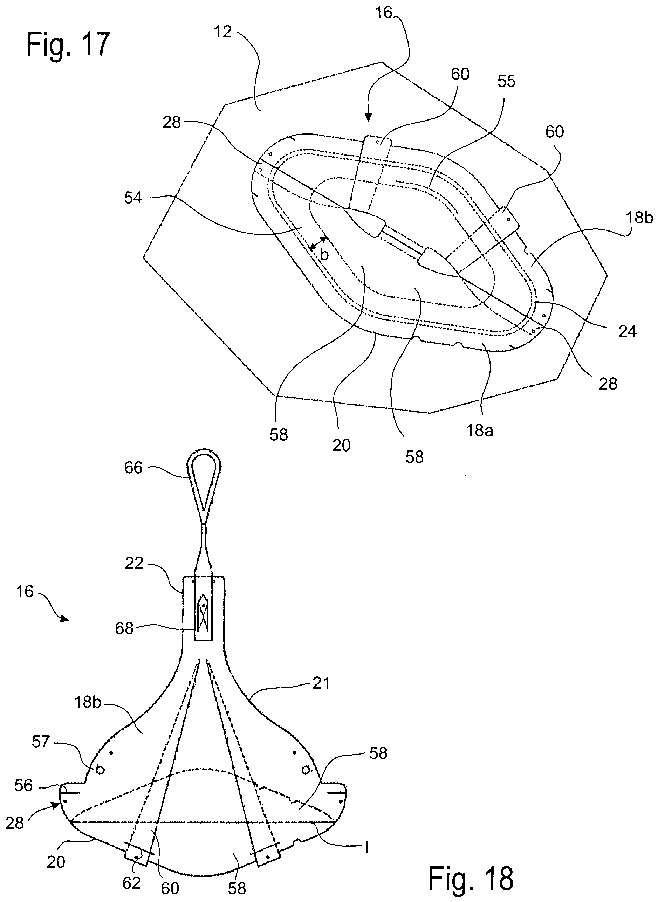

Die Figuren 17 bis 27 zeigen verschiedenen Varianten des Verschlusselements 16.

Figur 17 zeigt den Rand der Öffnung 14, obwohl dieser in der Draufsicht durch das darüberliegende Verschlusselement 16 verdeckt ist.

Bei den hier dargestellten Ausführungsformen ist die Öffnung 14 im Gassackmantel 12 jeweils rautenförmig mit abgerundeten Ecken ausgeführt.

Der Umfangsrand 20 des Verschlusselements 16 hat im Wesentlichen dieselbe Form, ist aber ein Stück größer.

Die Umfangsnaht 24, die den Umfangsrand 20 des Verschlusselements 16 mit dem Gassackmantel 12 verbindet, ist mit einem radialen Abstand b zum Innenrand der Öffnung 14 ausgeführt. Auf diese Weise entsteht zwischen der Umfangsnaht 24 und dem Rand der Öffnung 14 eine gegenüber dem Verschlusselement 16 im Wesentlichen bewegliche Blende 54, die radial über die Umfangsnaht 24 nach innen vorsteht. Es können eine oder mehrere Opfernähte 55 zusätzlich zur Umfangsnaht 24 vorgesehen sein.

Die Blende 54, die sich stets in etwa in Verlängerung des Gassackmantels 12 erstreckt, hat unter anderem die Funktion, im geschlossenen Zustand des Verschlusselements 16 eine Abdichtung zu schaffen.

Außerdem wird durch die Blende 54 eine direkte Krafteinwirkung auf den Rand der Öffnung 14 vermieden, weshalb die Öffnung 14 einen im Wesentlichen gleichbleibenden Querschnitt behält und damit stets ein reproduzierbarer Gasaustritt aus dem Gassackinneren in das Verschlusselement 16 erfolgt.

Die Rautenform von Öffnung 14 und Umfangsnaht 24 ermöglicht eine flache Packung der Gewebelagen des Gassacks 10.

Figur 18 zeigt das in Figur 17 dargestellte Verschlusselement 16 alleine.

Die langgestreckten Enden 22 der beiden Zuschnittsabschnitte 18a, 18b werden miteinander vernäht (siehe auch Figur 5). Außerdem werden die beiden Zuschnittsabschnitte 18a, 18b an den äußeren Bereichen 28 hier mittels jeweils einer Quernaht 56 sowie einer Knopfnaht 57 aneinander befestigt. Weitere Fixierungen und Verbindungen sind in diesem Beispiel nicht vorgesehen.

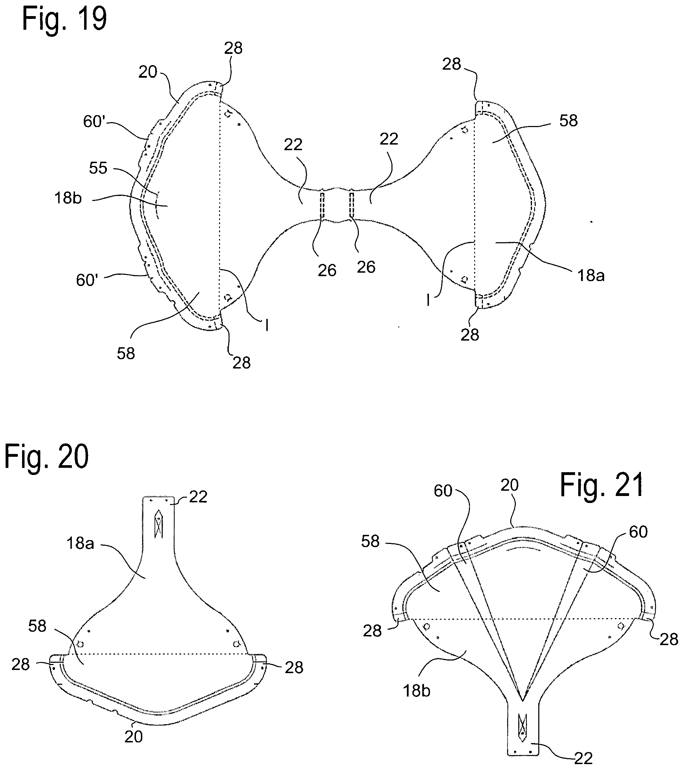

Der Umfangrand 20 jedes der Zuschnittsabschnitte 18a, 18b umschließt zusammen mit einer gedachten Linie I (siehe auch Figuren 19 bis 21) einen Teilbereich 58, wobei die beiden Teilbereiche 58 aneinanderliegend eine Fläche bilden, die in ihrer Form der Öffnung 14 entspricht, aber so groß ist, dass sie die Öffnugn14 vollständig überdecken kann. Dies erlaubt es, mittels der beiden Teilbereiche 58 eine geschlossene Fläche über der Öffnung 14 auszubilden, wenn das Verschlusselement 16 in seiner geschlossenen Stellung ist (siehe Figur 18).

Figur 19 zeigt einen Zuschnitt für das Verschlusselement 16, bei dem die beiden Zuschnittsabschnitte 18a, 18b an ihren langgestreckten Enden 22 einstückig miteinander verbunden sind. Der in Figur 18 rechts außen gelegene Umfangsrand des Zuschnittsabschnitts 18a weist bereits die Kontur der Umfangsnaht 24 auf, die in der Form dem Rand der Öffnung 14 entspricht.

In diesem Beispiel ist der Zuschnittsabschnitt 18b flächenmäßig größer als der Zuschnittsabschnitt 18a, da dort zusätzliches Gewebe 60' für in diesem Beispiel zwei Falten 60 vorgesehen ist. Die Falten 60 werden beginnend vom langgestreckten Ende 22 des Zuschnittsabschnitts 18b gefaltet und mittels einer Quernaht 62 am Umfangsrand 20 permanent fixiert. Auf diese Weise erlangt der Zuschnittsabschnitt 18b eine gekrümmte Form, die nicht vollständig flach ausbreitbar ist. Die Falten 60 sorgen für eine Vorkrümmung und eine Stabilisierung für das Verschlusselement 16 in der geöffneten Stellung.

Im Teilbereich 58 sind die Falten 60 so ausgebildet, dass der Teilbereich 58 mitsamt der Falten 60 flach ausgebreitet werden kann.

Die Figuren 20 und 21 zeigen eine ähnliche Ausführungsform, bei der lediglich die beiden Zuschnittsabschnitte 18a, 18b separat voneinander ausgeschnitten werden und nicht einstückig verbunden sind.

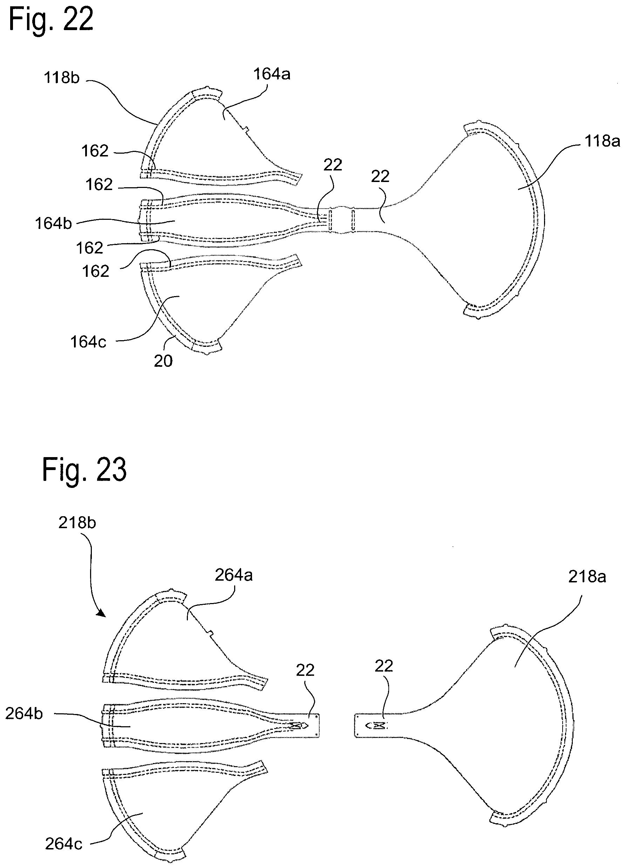

Figur 22 zeigt eine Ausführungsform, bei der der Zuschnittsabschnitt 118b aus insgesamt drei Zuschnittsteilen 164a, 164b und 164c besteht. Anstelle der Falten 60 werden hier Bogennähte 162 verwendet, um die gekrümmte, nicht flach ausbreitbare, dreidimensionale Form des Zuschnittsabschnitts 118b herzustellen. In diesem Beispiel sind alle Verbindungsnähte als gekrümmte Bogennähte ausgebildet, es wäre jedoch auch möglich, einige der Nähte gerade auszuführen, abhängig von der gewünschten Form.

Das mittlere Zuschnittsteil 164b ist hier einstückig mit dem wie in Figur 19 ausgebildeten Zuschnittsabschnitt 118a verbunden. Die restlichen Zuschnittsteile 164a und 164c werden seitlich an dem mittleren Teil 164b angenäht.

Eine Variante, bei der alle drei Zuschnittsteile 264a, 264b, 264c als separate Teile ausgebildet sind, zeigt Figur 23.

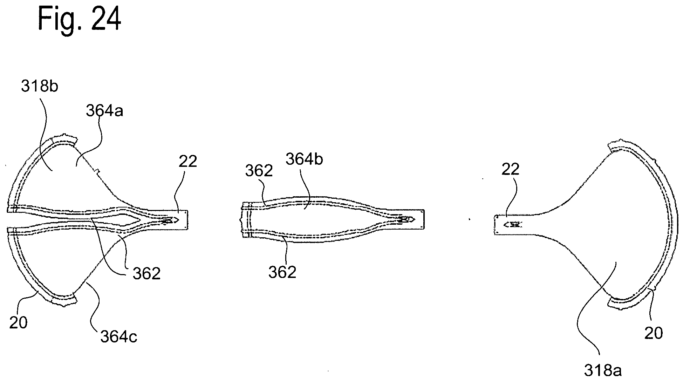

Figur 24 zeigt eine ähnliche Gestaltung, bei der jedoch die Zuschnittsteile 364a und 364c einstückig miteinander ausgebildet sind, während das mittlere Zuschnittsteil 364b als separates Teil gestaltet ist. Auch der dem Zuschnittsabschnitt 18a entsprechende Abschnitt 318a ist hier als separates Zuschnittsteil gebildet.

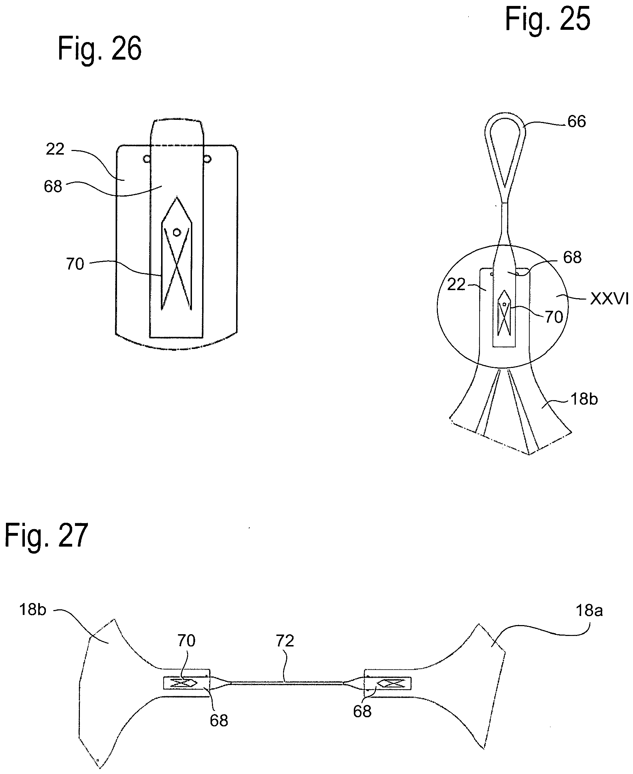

Die Figuren 25 bis 27 zeigen die Befestigung eines Fangbands am Verschlusselement 16. Die beiden Zuschnittsabschnitte 18a, 18b können auf beliebigem Weg hergestellt sein, auch wie für die Zuschnittsabschnitte 118b, 218b und 318b beschrieben.

In Figur 25 ist an den langgestreckten Enden 22 der beiden aufeinandergelegten Zuschnittsabschnitte 18a, 18b eine Schlaufe 66 mit einem daran anschließenden Gewebeabschnitt 68 fixiert, indem der Gewebeabschnitt 68 mit einer speziellen Nahtgeometrie 70 an beiden Zuschnittsabschnitten 18a, 18b gleichzeitig vernäht ist (siehe Figur 26).

Durch die Schlaufe 66 wird später das Fangband 34 gezogen, wenn das Verschlusselement 16 in den Gassackmantel 12 eingesetzt wird.

Figur 27 zeigt hingegen eine Variante, bei der ein Band 72 (das natürlich auch eine Schnur, eine Kordel oder etwas anderes sein kann) mit zwei fest daran fixierten Gewebeabschnitten 68 vorgesehen ist, die jeweils an den langgestreckten Enden 22 jeweils eines der Zuschnittsabschnitte 18a, 18b vernäht sind. Werden die beiden Zuschnittsabschnitte 18a, 18b aneinander fixiert, so bildet das Band 72 automatisch eine Schlaufe, durch die später das Fangband 34 gezogen wird.

## Patentansprüche

1. Gassack mit wenigstens einer in einem Gassackmantel (12) vorgesehenen Öffnung (14), an die ein Verschlusselement (16) mit wenigstens einer Ausströmöffnung (32) angesetzt ist, wobei das Verschlusselement (16) wenigstens zwei übereinanderliegende Zuschnittsabschnitte (18a - 318a, 18b - 318b) aufweist, wobei die Zuschnittsabschnitte (18a - 318a, 18b - 318b) entlang eines Umfangrands (20) mit dem Gassackmantel (12) verbunden sind, **dadurch gekennzeichnet, dass** wenigstens einer der Zuschnittsabschnitte (18b - 318b) eine oder mehrere abgenähte Falten (60) aufweist und/oder aus mehreren Zuschnittsteilen (164b - 364b) mit wenigstens einer Bogennaht (162 - 362) zusammengesetzt ist, sodass der Zuschnittsabschnitt (18b - 318b) nicht flach ausbreitbar ist und eine gewölbt vorgeformte Form aufweist, sodass eine Stabilisierung der Form des Verschlusselements in der geöffneten Stellung erreicht wird.

2. Gassack nach Anspruch 1, **dadurch gekennzeichnet, dass** das an dem Verschlusselement (16) ein Fangband (34) angreift, über das das Verschlusselement (16) in einer geschlossenen Stellung gehalten werden kann, wobei das Fangband (34) an einer pyrotechnischen Freigabevorrichtung (36) fixiert ist, die mit einer Steuereinheit (40) gekoppelt ist, welche in Abhängigkeit von insassen- und/oder fahrzeugbezogenen Parametern das Fangband (34) freigibt, wodurch das Verschlusselement (16) in eine geöffnete Stellung gelangt.

3. Gassack nach Anspruch 1 oder 2, **dadurch gekennzeichnet, dass** jeder der Zuschnittsabschnitte (18a - 318a, 18b - 318b) einen Teilbereich (58) aufweist, der sich vom Umfangsrand (20) in die Fläche des Zuschnittsabschnitts (18a - 318a, 18b - 318b) erstreckt und sich die beiden Teilbereiche (58) in der geschlossenen Stellung des Verschlusselements (16) zu einer Fläche ergänzen, die in ihrer Form der Querschnittsfläche der Öffnung (14) im Gassackmantel (12) entspricht.

4. Gassack nach einem der Ansprüche 1 bis 3, **dadurch gekennzeichnet, dass** das Verschlusselement (16) aus zwei übereinanderliegenden Zuschnittsabschnitten (18a - 318a, 18b - 318b) besteht, die jeweils etwa keulen- oder glockenförmig gestaltet sind, wobei an einem langgestreckten Ende (22) jedes der Zuschnittsabschnitte (18a - 318a, 18b - 318b) das Fangband (34) ansetzt und an dem dem langgestreckten Ende (22) gegenüberliegenden Umfangsrand (20) der Zuschnittsabschnitt (18a - 318a, 18b - 318b) am Gassackmantel (12) befestigt ist, wobei die Zuschnittsabschnitte (18a - 318a, 18b - 318b) miteinander am langgestreckten Ende (22) sowie jeweils an einem Randbereich (28) im Bereich des Umfangsrands (20) vernäht sind, wobei die Zuschnittsabschnitte (18a - 318a, 18b - 318b) über einen Großteil der zwischen dem langgestreckten Ende (22) und dem Umfangsrand (20) liegenden Seitenränder (21) nicht verbunden sind, sodass zwei seitliche Ausströmöffnungen (32) im Verschlusselement (16) gebildet sind.

5. Gassack nach Anspruch 3, **dadurch gekennzeichnet, dass** die beiden Zuschnittsabschnitte (18a, 18b; 118a, 118b) an ihren langgestreckten Enden (22) einstückig miteinander verbunden sind.

6. Gassack nach einem der Ansprüche 1 bis 4, **dadurch gekennzeichnet, dass** zur Befestigung des Fangbands (34) am Verschlusselement (16) eine Schlaufe (66, 72) vorgesehen ist, an der das Fangband (34) angreift.

7. Gassack nach einem der vorherigen Ansprüche, **dadurch gekennzeichnet, dass** das Verschlusselement (16) in der geöffneten Stellung eine sich verjüngende Hohlkörperform, insbesondere eine Kegelform oder Trichterform, hat.

8. Gassack nach Anspruch 2 und nach einem der Ansprüche 3 bis 7, **dadurch gekennzeichnet, dass** am Fangband (34) eine Verriegelungsstruktur (42) vorgesehen ist, die ab einem vorbestimmten Entfaltungszustand des Gassacks (10) eine Rückbewegung des Verschlusselements (16) verhindert.

9. Gassack nach einem der vorherigen Ansprüche, **dadurch gekennzeichnet, dass** der Umfangsrand (20) des Verschlusselements (16) umlaufend um den Rand der Öffnung (14) so befestigt ist, dass der Rand der Öffnung (14) eine umfangsmäßig umlaufende Blende (54) bildet, die radial über den Umfangsrand (20) des Verschlusselements (16) nach innen vorsteht.

10. Gassack nach einem der vorherigen Ansprüche, **dadurch gekennzeichnet, dass** die Querschnittsfläche der Öffnung (14) in etwa rautenförmig ist.

11. Verfahren zum Betrieb eines Fahrzeuginsassenschutzsystems mit einem Gassack (10) nach einem der vorhergehenden Ansprüche und zumindest dem Anspruch 2, wobei die mit der Freigabevorrichtung (36) gekoppelte Steuereinheit (40) das Lösen des Fangbands (34) bereits zu Beginn des Entfaltungsvorgangs veranlasst, wenn eine mit der Steuereinheit (40) verbundene Sensorik vorbestimmte insassen- und/oder fahrzeugbezogene Parameter erkennt.

12. Verfahren zum Betrieb eines Fahrzeuginsassenschutzsystems mit einem Gassack (10) nach einem der vorhergehenden Ansprüche und zumindest dem Anspruch 2, wobei in einem anfänglichen Entfaltungszustand des Gassacks (10) das Verschlusselement (16) in seiner geöffneten Stellung ist,
wobei mit zunehmender Entfaltung des Gassacks (10) das Verschlusselement (16) in das Innere des Gassackmantels (12) in die geschlossene Stellung hineingezogen wird und auf das Fangband (34) über dessen Fixierung ab einem vorbestimmten Entfaltungszustand ein ausreichender Zug auf das Verschlusselement (16) ausgeübt wird, um das Verschlusselement (16) in der geschlossenen Stellung zu halten und
wobei die Freigabevorrichtung (36) in Abhängigkeit von vorbestimmten insassen- und/oderfahrzeugbezogenen Parametern das Fangband (34) lösen kann, sodass das Verschlusselement (16) durch den Innendruck des Gassacks (10) wieder in seine geöffnete Stellung bewegt wird.

## Claims

1. An airbag comprising at least one opening (14) which is provided in an airbag shell (12) and to which a closing element (16) having at least one discharge port (32) is attached, wherein the closing element (16) includes at least two superposed cut portions (18a - 318a, 18b - 318b), the cut portions (18a - 318a, 18b - 318b) being connected to the airbag shell (12) along a peripheral edge (20), **characterized in that**
at least one of the cut portions (18b - 318b) includes one or more stitched down folds (60) and/or is composed of plural cut parts (164b - 364b) by at least one curved seam (162 - 362) so that the cut portion (18b - 318b) cannot be flatly spread and takes an arcuately preformed shape so that stabilization of the shape of the closing element in the opened position is obtained.

2. The airbag according to claim 1, **characterized in that** a tether (34) via which the closing element (16) can be retained in a closed position acts on the closing element (16), wherein the tether (34) is fixed to a pyrotechnical release device (36) being coupled to a control unit (40) which releases the tether (34) in response to occupant-based and/or vehicle-based parameters, thus causing the closing element (16) to reach an opened position.

3. The airbag according to claim 1 or 2, **characterized in that** each of the cut portions (18a - 318a, 18b - 318b) includes a segment (58) extending from the peripheral edge (20) into the surface area of the cut portion (18a - 318a, 18b - 318b) and the two segments (58) in the closed position of the closing element (16) supplementing each other to form a surface area that corresponds as to its shape to the cross-sectional area of the opening (14) in the airbag shell (12).

4. The airbag according to any one of the claims 1 to 3, **characterized in that** the closing element (16) consists of two superposed cut portions (18a - 318a, 18b - 318b) each being approximately club-shaped or bell-shaped, wherein at an elongate end (22) of each of the cut portions (18a - 318a, 18b - 318b) the tether (34) is attached and is fastened at the peripheral edge (20) of the cut portions (18a - 318a, 18b - 318b) opposed to the elongate end (22) on the airbag shell (12), wherein the cut portions (18a - 318a, 18b - 318b) are joined by sewing at the elongate end (22) as well as at a respective rim area (28) in the area of the peripheral edge (20), wherein the cut portions (18a - 318a, 18b - 318b) are not connected over a major part of the side edges (21) located between the elongate end (22) and the peripheral edge (20) so that two lateral discharge ports (32) are formed in the closing element (16).

5. The airbag according to claim 3, **characterized in that** the two cut portions (18a, 18b; 118a, 118b) are integrally connected to each other at their elongate ends (22).

6. The airbag according to any one of the claims 1 to 4, **characterized in that** for fastening the tether (34) to the closing element (16) a loop (66, 72) is provided on which the tether (34) acts.

7. The airbag according to any one of the preceding claims, **characterized in that** the closing element (16) takes a tapering hollow shape, especially a cone shape or funnel shape, in the opened position.

8. The airbag according to claim 2 and according to any one of the claims 3 to 7, **characterized in that** at the tether (34) a locking structure (42) is provided for preventing a return movement of the closing element (16) from a predetermined deployment state of the airbag (10).

9. The airbag according to any one of the preceding claims, **characterized in that** the peripheral edge (20) of the closing element (16) is fastened circumferentially around the edge of the opening (14) so that the edge of the opening (14) forms a peripherally circumferential cover (54) which projects inwardly radially from the peripheral edge (20) of the closing element (16).

10. The airbag according to any one of the preceding claims, **characterized in that** the cross-sectional surface of the opening (14) is approximately diamond-shaped.

11. A method of operating a vehicle occupant protection system comprising an airbag (10) according to any one of the preceding claims and at least claim 2, wherein the control unit (40) coupled to the release device (36) causes the tether (34) to be released already at the beginning of the deployment operation, when a sensor system connected to the control unit (40) identifies predetermined occupant-based and/or vehicle-based parameters.

12. The method of operating a vehicle occupant protection system comprising an airbag (10) according to any one of the preceding claims and at least claim 2, wherein in an initial deployment state of the airbag (10) the closing element (16) is provided in its opened position,
wherein upon increasing deployment of the airbag (10) the closing element (16) is drawn into the interior of the airbag shell (12) to the closed position and from a predetermined deployment state sufficient tension is exerted upon the tether (34) via fixation thereof on the closing element (16) so as to retain the closing element (16) in the closed position, and
wherein the release device (36) can release the tether (34) in response to predetermined occupant-based and/or vehicle-based parameters so that the closing element (16) is returned to its opened position again by the internal pressure of the airbag (10).

## Revendications

1. Coussin gonflable comportant au moins une ouverture (14) prévue dans une enveloppe (12) d'airbag sur laquelle est fixé un élément de fermeture (16) comportant au moins un évent (32), pour lequel l'élément de fermeture (16) comprend au moins deux parties prédécoupées superposées (18a-318a, 18b - 318b), pour lequel les parties prédécoupées (18a - 318a, 18b - 318b) sont connectées le long d'un bord périphérique (20) à l'enveloppe (12) de l'airbag, **caractérisé en ce qu'**au moins une des parties prédécoupées (18b - 318b) possède un ou plusieurs plis (60) cousus et/ou est assemblée d'une pluralité de pièces prédécoupées (164b - 364b) avec au moins une couture en feston (162 - 362), de sorte que la partie prédécoupée (18b - 318b) se s'étale pas à plat et présente une forme préformée incurvée, de sorte que l'on obtient une tenue en position ouverte de la forme de l'élément de fermeture.

2. Coussin gonflable selon la revendication 1, **caractérisé en ce que** sur l'élément de fermeture (16) est engagée une attache (34) par laquelle l'élément de fermeture (16) peut être maintenu dans une position fermée, pour lequel l'attache (34) est fixée sur un dispositif de déclenchement pyrotechnique (36), lequel est couplée à une unité de commande (40), ce qui libère l'attache (34) en fonction des paramètres de l'occupant et/ou du véhicule, grâce à quoi l'élément de fermeture (16) se met en position ouverte.

3. Coussin gonflable selon la revendication 1 ou 2, **caractérisé en ce que** chacune des parties prédécoupées (18a - 318a, 18b - 3 8b) comporte une sous-partie (58), laquelle s'étend du bord périphérique (20) à la surface de la partie prédécoupée (18a - 318a, 18b - 318b) et, dans la position fermée de l'élément de fermeture (16), les deux sous-parties (58) se complètent mutuellement sur une surface, qui correspond à la section d'ouverture (14) de l'enveloppe (12) de l'airbag.

4. Coussin gonflable selon l'une quelconque des revendications 1 à 3, **caractérisé en ce que** l'élément de fermeture (16) se compose de deux parties prédécoupées superposées (18a - 318a, 18b - 318 b), qui sont chacune conçues approximativement en forme de lobe ou de cloche, pour lequel l'attache (34) se fixe à une extrémité allongée (22) de chacune des parties prédécoupées (18a - 318a, 18b - 318b) et la partie prédécoupée (18a - 318a, 18b-318b) est fixée à l'enveloppe (12) d'airbag au niveau du bord périphérique (20) opposé à l'extrémité allongée (22), pour lequel les parties prédécoupées (18a - 318a, 18b- 318b) sont cousues les unes avec les autres aux extrémités allongées (22) ainsi que chacune des zones de bord (28) dans la zone du bord périphérique (20), pour lequel les portions prédécoupées (18a - 318a, 18b, 318b) ne sont pas reliées sur une grande partie située entre l'extrémité allongée (22) et le bord périphérique (20) des bords latéraux opposés (21), de sorte que deux évents latéraux (32) sont présents dans l'élément de fermeture (16).

5. Coussin gonflable selon la revendication 3, **caractérisé en ce que** les deux parties prédécoupées (18a, 18b, 118a, 118b) sont reliées intégralement l'une à l'autre au niveau de leurs extrémités allongées (22).

6. Coussin gonflable selon l'une des revendications 1 à 4, **caractérisé en ce que** pour la fixation de l'attache (34) sur l'élément de fermeture (16) est prévue une boucle (66, 72), sur laquelle s'accroche l'attache (34).

7. Coussin gonflable selon l'une des revendications précédentes, **caractérisé en ce que** l'élément de fermeture (16) en position ouverte présente une forme en corps creux effilé, en particulier de forme conique ou en forme d'entonnoir.

8. Coussin gonflable selon la revendication 2 et selon l'une des revendications 3 à 7, **caractérisé en ce que** sur l'attache (34) est prévue une structure de verrouillage (42), qui empêche un mouvement de retour de l'élément de fermeture (16) à partir d'un état prédéterminé de déploiement du coussin gonflable (10).

9. Coussin gonflable selon l'une des revendications précédentes, **caractérisé en ce que** le bord périphérique (20) de l'élément de fermeture (16) est fixé sur la circonférence autour du bord de l'ouverture (14), de sorte que le bord de l'ouverture (14) présente une ouverture circonférentielle (54), laquelle fait saillie radialement vers l'intérieur au-delà du bord périphérique (20) de l'élément de fermeture (16).

10. Coussin gonflable selon l'une des revendications précédentes, **caractérisé en ce que** la section transversale de l'ouverture (14) est approximativement en forme de losange.

11. Procédé de fonctionnement d'un système de protection des occupants avec un coussin gonflable (10) selon l'une quelconque des revendications précédentes et au moins la revendication 2, pour lequel l'unité de commande (40) couplée au dispositif de déclenchement (36) déclenche au début du processus de déploiement la libération de l'attache (34) lorsqu'un capteur connecté de l'unité de commande (40) détecte les paramètres prédéterminés concernant l'occupant et/ou du véhicule.

12. Procédé de fonctionnement d'un système de protection des occupants avec un coussin gonflable (10) selon l'une quelconque des revendications précédentes et au moins la revendication 2, pour lequel dans un état de déploiement initial du coussin gonflable (10) l'élément de fermeture (16) est dans sa position ouverte,
pour lequel lors d'un déploiement progressif du coussin gonflable (10), l'élément de fermeture (16) est tiré à l'intérieur de l'enveloppe (12) de l'airbag dans la position fermée et au travers de l'attache (34) par sa fixation à partir d'un état de déploiement prédéterminé, un effort suffisant est appliqué sur l'élément de fermeture (16) pour maintenir l'élément de fermeture (16) dans la position fermée et
pour lequel le dispositif de libération (36) en réaction à des paramètres prédéterminés concernant l'occupant et/ou le véhicule peut libérer l'attache (34), de sorte que l'élément de fermeture (16) du fait de la pression intérieure du coussin gonflable (10) est ramené dans sa position ouverte.
